# EUROPEAN PATENT SPECIFICATION

(11) **EP 0 940 039 B1**
(45) Date of publication and mention of the grant of the patent: **10.09.2003**
(21) Application number: 97927845.4
(22) Date of filing: 29.05.1997
(51) Int. Cl.: H04N 7/169

(54) **METHOD AND APPARATUS FOR COMPRESSION COMPATIBLE VIDEO SCRAMBLING**
VERFAHREN UND GERÄT ZUR KOMPRESSIONSKOMPATIBLEN VIDEOVERSCHLÜSSELUNG
PROCEDE ET DISPOSITIF POUR EMBROUILLAGE VIDEO COMPATIBLE EN COMPRESSION

(30) Priority: 29.05.1996 US 18388 P
(43) Date of publication of application: 08.09.1999
(73) Proprietor: Macrovision Corporation, Santa Clara, CA 95050 (US)
(72) Inventor: RYAN, John, O., Cupertino, CA 95014 (US)
(74) Representative: Needle, Jacqueline
(86) International application number: US9709210
(87) International publication number: WO97046018

(56) References cited:
- EP-A- 0 416 894
- EP-A- 0 543 294
- US-A- 4 682 360
- US-A- 4 901 349
- SMPTE JOURNAL, vol. 100, no. 3, 1 March 1991, WHITE PLAINS, NY, US, pages 162-166, XP000178490 VIGNEAUX S ET AL: "A REAL-TIME VIDEO MAPPING AND MANIPULATION SYSTEM"

## Description

The present invention relates to a method and apparatus of scrambling a video image.

There is a need for a secure video scrambling method which has the property that the scrambled video is compatible with the various video compression systems currently in use. In particular, it should be compatible with compression systems based on for example the Discrete Cosine Transform (DCT), which may employ inter-field redundance coding. Motion picture experts group (MPEG-1 and MPEG-2) are examples of such compression systems. In anticipated applications, the video signal generally is subjected to the processes of scrambling, compression, decompression and descrambling - in that order. The scrambled video therefore will be subjected to the processes of compression and decompression prior to descrambling.

Scrambling systems in use tend to interfere with the natural redundancy in a television signal that the compression systems of previous mention depend upon to realise maximum compression. When redundancy is disturbed, the bit rate requirements for the compression system rise, possibly to an unacceptable level, for the transmission path of the compressed video signal. Therefore there is need for a scrambling system that does not reduce the natural redundancy to a level that requires excessive bit rates to provide a given picture quality.

Prior art scrambling systems using line cut and rotate or line shuffling techniques, for example, are fundamentally incompatible with DCT-based compression methods because they grossly de-correlate information within the DCT pixel matrix. As discussed above, optimal operation of DCT systems is predicated on the existence of a high degree of correlation within each such matrix to effect efficient intro-field compression.

Moreover, the pseudo-random field-by-field changes of the scrambling pattern which these scrambling systems often utilise to increase security, make it impossible to effect further compression by relying on the normal high level of inter-field redundancy of a video signal. Examples of scrambling systems based on the process known by the trademark PhaseKrypt are described in U.S. Patents Nos. 5,058,157, Re. 35,078, 5,438,620, 5,504,815, 5,608,789, 5,581,507 and 5,579,390. In principle these systems are unsuitable for achieving the purposes of this invention as they also eliminate this natural inter-field redundancy.

There are various other scrambling methods such as sync suppression and video inversion, for example, which are quite compatible with DCT-based compression. However these methods cannot provide sufficient signal security.

EP-A-0,416,894 describes a method of scrambling a video image comprising the steps of providing a predetermined warp pattern commensurate with a selected local spatial distortion to be applied to the video image; and applying the selected local spatial distortion to the video image to locally displace individual portions of the image with respect to their normal locations, as provided by the predetermined warp pattern, wherein the warp pattern is such that the local spatial distortion applied to the portions of the video image is sufficient to render the scrambled image unwatchable, and wherein the original video image is in the form of a two-dimensional array of pixels.

It is an object of the invention to provide a scrambling method and apparatus which reduces the incompatibility problems encountered in prior art scrambling systems.

According to a first aspect of the present invention there is provided a method of the type defined which is characterised in that the selected local spatial distortion is applied to the array of pixels to locally spatially displace the pixels within the array in response to the predetermined warp pattern whilst maintaining a given pixel in the displaced pixels with the same set of contiguous pixels as it had in the original video image.

An embodiment of a method of the invention enables the compression system to operate on scrambled versus unscrambled video without any increase in the bit-rate needed to provide a given picture quality, and ensures that system performance (noise, distortion, etc.) is unaffected by the inclusion of the scrambling function.

Scrambling methods and apparatus of the invention are applicable to either analog (NTSC, PAL, SECAM) or digital (CCIR-601) video signals.

Embodiments of the method of the invention intrinsically provide a high level of resistance to hacking, so that they provide the basis of a secure scrambling system. In other words, it is very difficult to descramble the video by analysis of the scrambled video only.

In addition, embodiments of the present scrambling method admit of a very large number of permutations (scrambling patterns) herein termed "warp patterns", which ensure the methods against trial and error attacks by unauthorised persons. Authorised descrambling techniques and devices are provided with the correct permutation via a designated secure data encryption method.

The scrambling methods described herein are primarily intended for entertainment applications such as video movies, television (TV) shows, and the like. Consequently, it is not essential that the scrambling method effect total concealment of the image. However, sufficient image concealment or distortion is provided so that the entertainment value of the video is eliminated effectively.

In addition to the above, for maximum operational flexibility, embodiments of the invention ensure that the scrambled video signal appears as a normal video signal to most if not all video processing methods and devices designed to operate with unscrambled video signals.

In particular, video signals scrambled in accordance with a method of the invention are compatible with all video recording, transmitting and processing devices likely to exist in a production or editing environment. Passage of the scrambled video through these devices does not cause any signal degradation (after descrambling) in excess of that caused by passage of unscrambled video through these same devices.

Further, the present scrambling method, or at least a particular embodiment of it. is compatible with consumer video cassette recorders (VCRs). That is, the invention makes it possible to record the scrambled video signal on a consumer grade VCR, and replay it later for descrambling without incurring significant extra signal degradation.

More particularly, the invention provides a library of warp patterns, each of which is capable of imparting a selected degree of local spatial distortion to a video image. A pattern select code determines which stored warp pattern is supplied to a warp engine. The warp engine in turn applies the selected warp pattern to the video image to correspondingly locally spatially distort the image. In a typical application, the thusly scrambled video image and the pattern select code (suitably encrypted) which identifies the pattern, is transmitted via suitable networks such as cable, satellite, etc., to, for example, subscribing users.

The invention includes compatible descrambling of the scrambled signal to authorized users. To this end, the pattern select code is detected in the transmitted scrambled video image and is used to select a descrambling warp pattern, from a plurality of stored warp patterns, which is a complement to the warp pattern used to scramble the original video image. A warp engine applies the complementing warp pattern to the scrambled image to restore it to the original unscrambled video image, thereby allowing the authorized users access to the image.

### BRIEF DESCRIPTION OF THE DRAWINGS

FIG. 1 is a photograph of a scene without scrambling being applied by the invention;
FIG. 2 is a photograph of a first simulation of a scrambled picture in accordance with the invention;
FIG. 3 is a photograph of a second simulation of a scrambled picture in accordance with the invention;
FIG. 4 is a photograph of a third simulation of a scrambled picture in accordance with the invention;
FIG. 5 is a photograph of a fourth simulation of a scrambled picture in accordance with the invention;
FIG. 6 is a block diagram illustrating an embodiment of a scrambling apparatus in accordance with the invention; and
FIG. 7 is a block diagram illustrating an embodiment of a descrambling apparatus in accordance with the invention.

### DETAILED DESCRIPTION OF THE INVENTION

A compression system such as, for example, MPEG 1 and 2 of previous mention, relies on the condition that good correlation exists in the image. That is, that any point in an image is very similar to the points nearby. If a scrambling system shuffles the points of the image around within the image, then the image information is scattered and it no longer is true that at any given point on the image the adjacent points are very similar. That is, the scene has been de-correlated, and a substantial amount of high frequency detail which was not present before, has been added. Such a scrambling system greatly increases the bandwidth requirements of, and therefore is not compatible with, many compression systems.

The present invention circumvents the problem of incompatibility since it provides a scrambling technique which does not de-correlate the image. All pixels that were near other pixels prior to applying the scrambling process have the same relationship after the scrambling process. There is no re-arrangement of the pixels within the image, although the distances therebetween may have been altered somewhat. Thus, in some areas the frequency content may be increased and in others it may be reduced. It follows that a small amount of high frequency information may be lost due to low pass filtering in the associated video processing apparatus, which however is an acceptable compromise in view of the advantage of complete compatibility of the present invention with all conceivable compression systems.

The explanation of the invention method and apparatus is facilitated by the following analogy. Consider a scene viewed through a sheet of colorless obscuring glass, e.g. transparent glass with a bumpy surface. By specifying the "bumpiness" parameters, a sheet of glass may be designed which would prohibit recognition of faces and important image details in a scene, although the general features of the scene might still be discernible. In effect, the scene and thus the video signal generally no longer is of commercial value since the entertainment value has been removed.

However, although it obscures the scene, the present scrambling technique is compatible with all conceivable forms of compression systems because the application of the scrambling technique has not caused any de-correlation of the image. That is, pixels which are adjacent to each other prior to the application of the scrambling process, remain correspondingly adjacent after the image is scrambled. The various pixels may be slightly closer or further from each other in any direction, but they have not been displaced from their original order relative to each other.

Thus, the technique of the invention is based upon a "local spatial distortion" of the active video signal. More particularly, the invention comprises a particular kind of optical image scrambling which when modeled in the video domain becomes the basis of a video scrambling system having all of the desirable properties and requirements, and thus the attendant advantages, of previous mention.

To this end, a video processing means for providing the scrambling method and apparatus of the invention, embodies a local spatial image distortion of a video signal similar to that caused to a scene which is viewed through obscured glass. Such a device is referred to herein as a spatial image distortion (SID) scrambler having the following properties:
- displacement of each pixel of the original image by a certain amount (which may be zero) horizontally and/or vertically.
- maintaining a given pixel in the scrambled image with the same set of contiguous pixels that it had in the original image.
- pixels lying along the borders of the image preferably are not displaced to locations outside those borders, to avoid loss of portions of the image.

An array of number pairs, one pair for each pixel, is needed to describe the scrambling pattern for each field. The field scrambling pattern, herein termed a "warp" pattern for technical accuracy and ease of description, may be arranged to remain fixed for relativity long periods, to change slowly with time, or to change from frame-to-frame. By appropriate choice of warp patterns it is possible to effect a scrambling system having all of the properties and requirements specified above.

It is to be understood that the term "warp pattern" as employed herein refers to selected permutations or local scrambling patterns commensurate with the non-de-correlating scrambling technique of the invention, illustrated by the bumpy obscuring glass example of previous discussion. There is an enormous number of possible warp patterns available which in effect designate the amount by which each pixel has been displaced in a right, left, up or down direction. The warp pattern can be fixed or stable for an entire movie, or the pattern can be morphed from one pattern to another preferably gradually over a selected time interval such as a number of frames to a longer time interval of a plurality of seconds. The purpose for changing warp patterns is to increase the level of security, that is, to make it even more difficult for unauthorized persons to discover the identify of the warp pattern and thus override the scrambling process.

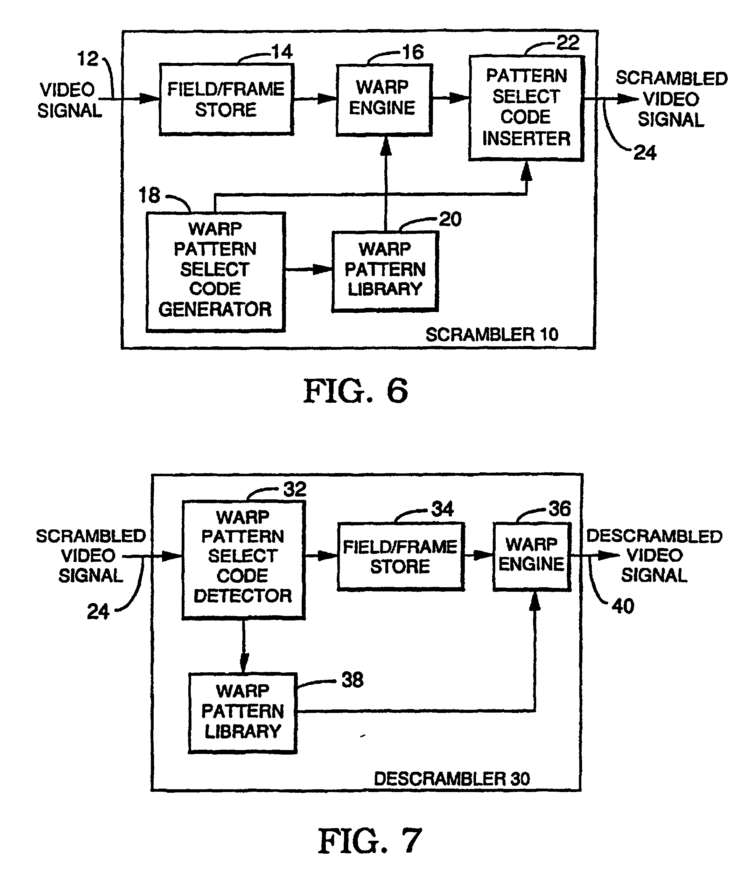

FIG. 6 illustrates an embodiment of a scrambling apparatus of the invention herein referred to as a scrambler 10. A digital video signal or the like is supplied to a field/frame store 14 via an input lead 12. The field/frame store 14 provides means to store a field or frame of video and to supply the video to a first input of a warp engine 16. A warp pattern select code generator 18 generates a warp pattern select code which, in turn, selects a desired warp pattern from a warp pattern library 20 which may include for example a look up table. The selected warp pattern is supplied to a second input of the warp engine 16. The warp pattern is applied by the warp engine to distort accordingly the pixel positions in the appropriate lines of the field or frame of video from the field/frame store 14.

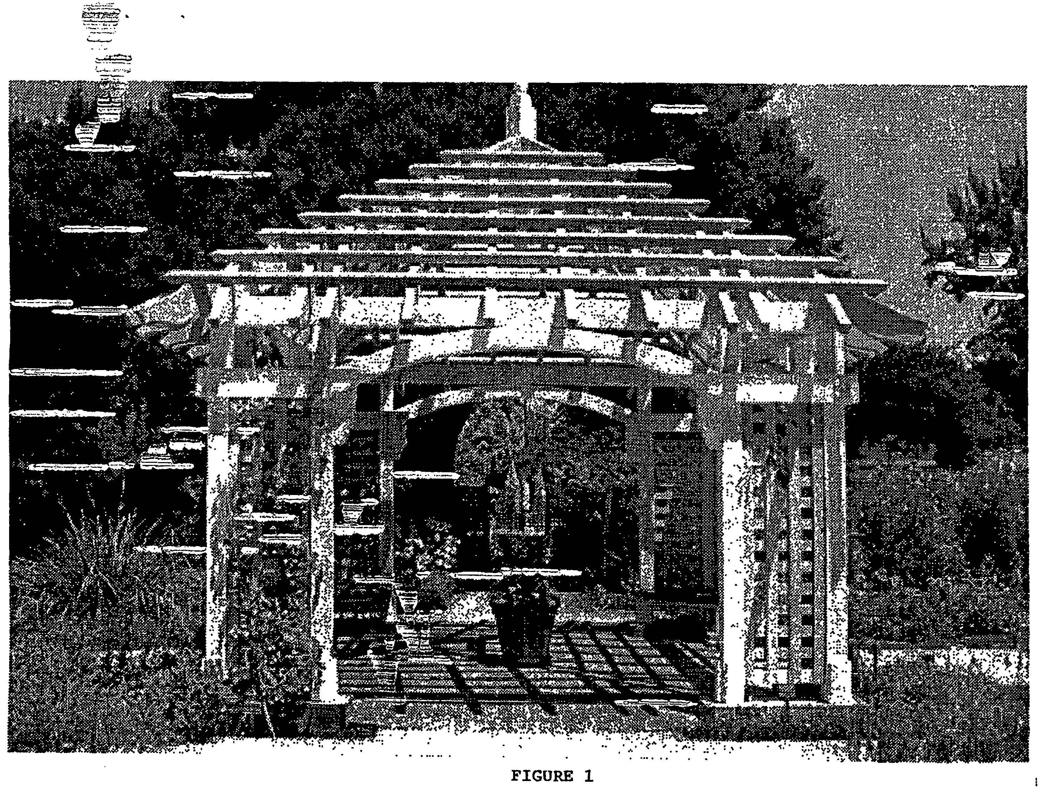

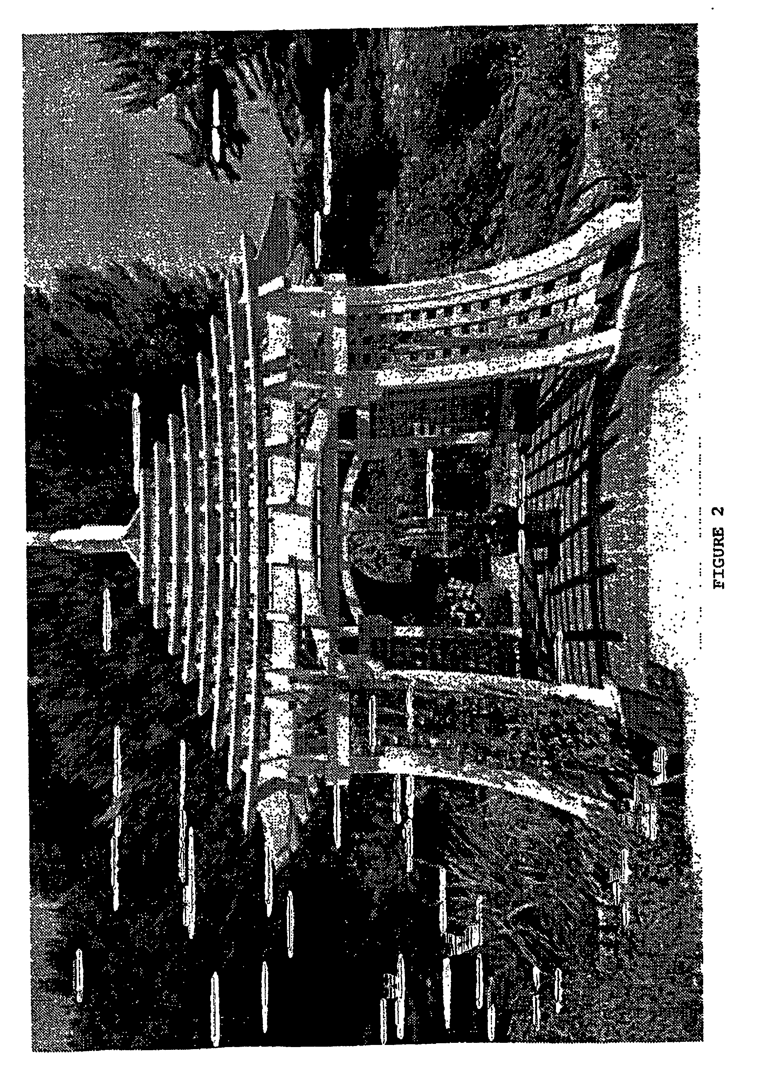

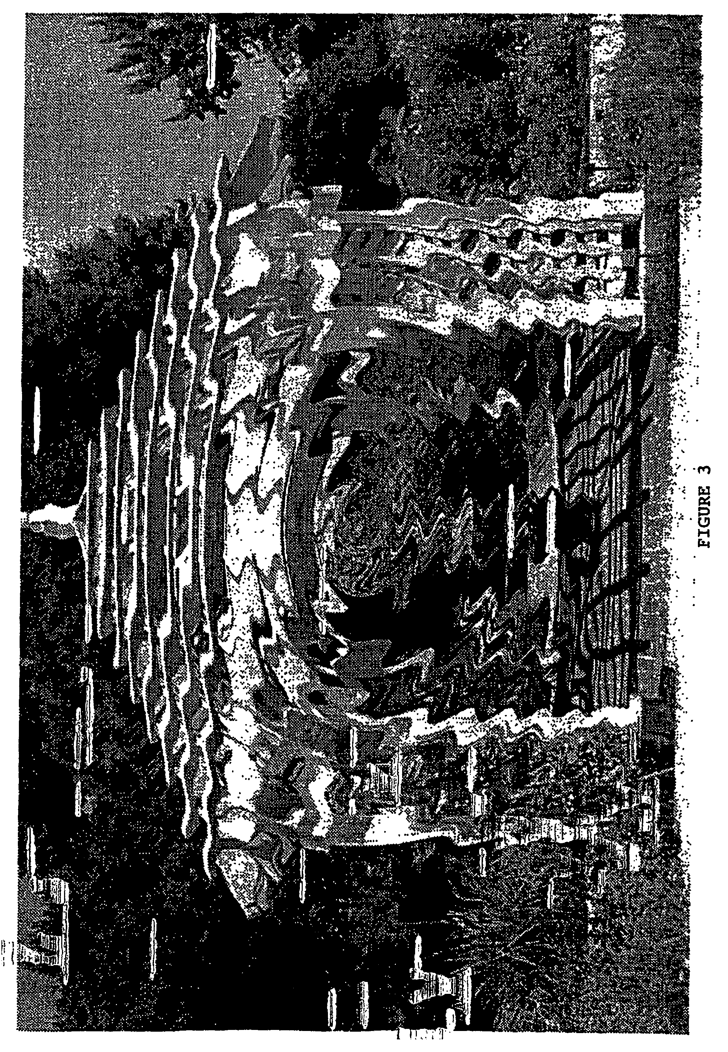

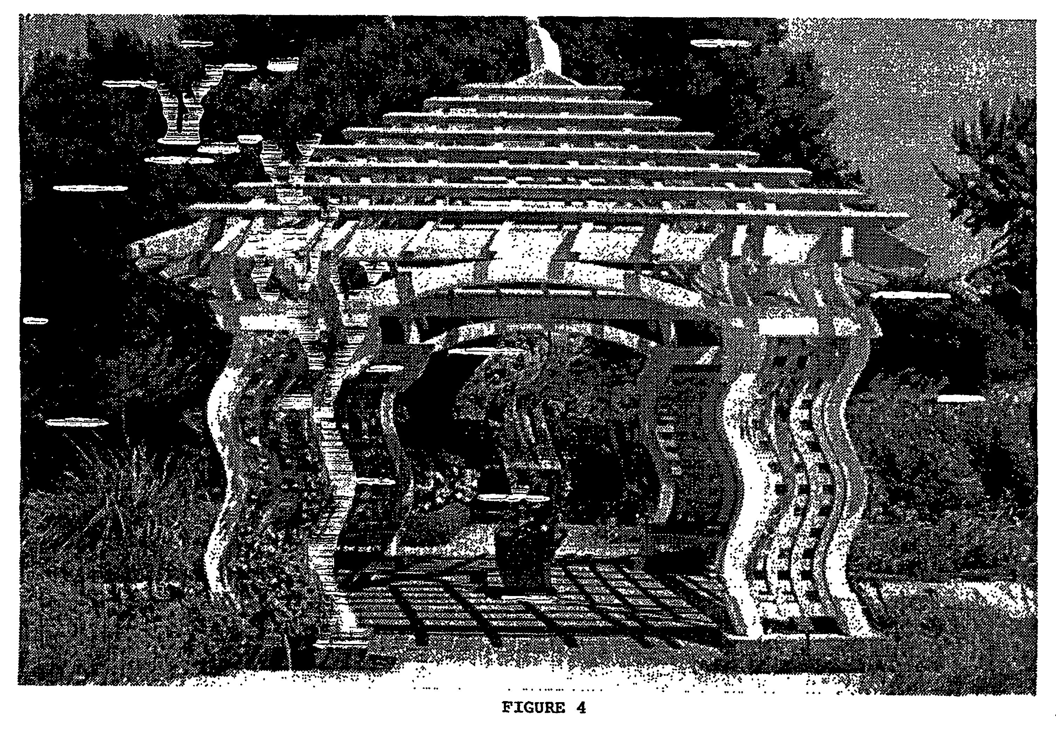

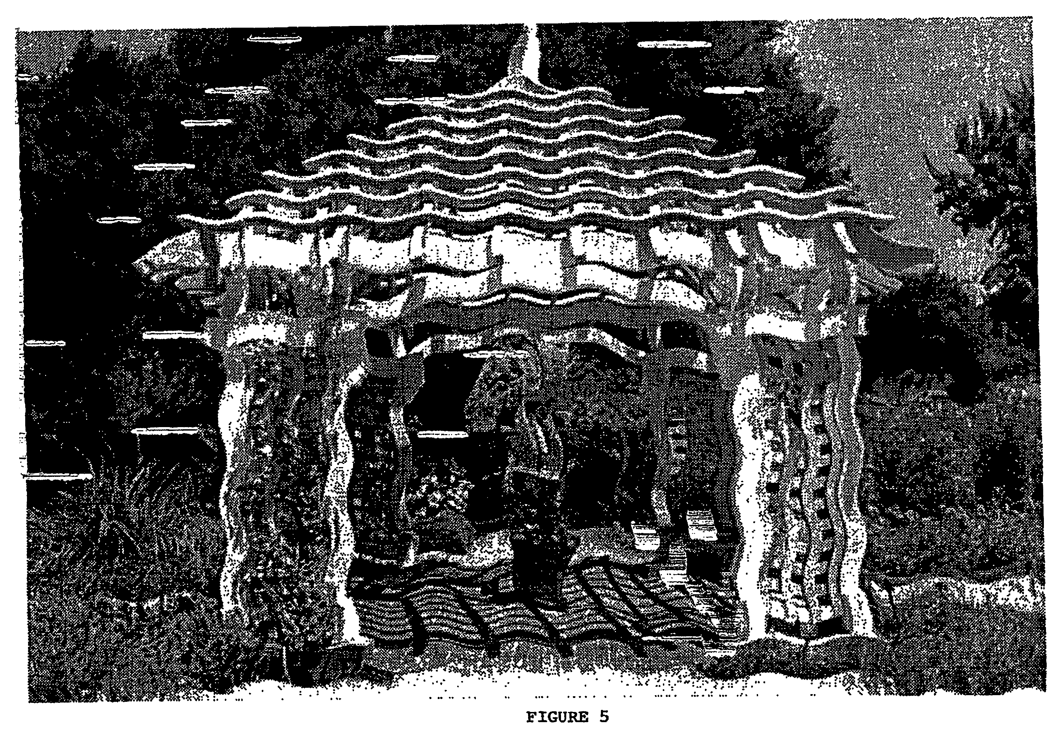

FIGs. 1-5 illustrate an undistorted original picture or image and four possible warp patterns of distortion, respectively. As may be seen, each warp pattern causes a different degree of distortion on the image.

The warp pattern select code from code generator 18 also is coupled to a warp pattern select code inserter 22. The warp pattern select code is added to the scrambled video signal from the warp engine 16 to provide information for the descrambling process. The warp pattern code may be inserted in a number of ways and will usually be encrypted. The output of warp pattern select code inserter 22 consists of the warp pattern select code suitably embedded in the scrambled video signal, and is coupled via an output lead 24 to for example, a transmission network or a compression engine.

An embodiment of a descrambler 30 is illustrated in FIG. 7 wherein similar elements of the FIGS. 6, 7 are similarly numbered. A scrambled digital video signal with the warp pattern select code, corresponding for example to the signal on output lead 24 of FIG. 6, is supplied to a warp pattern select code detector 32. The warp pattern select code supplied via the code generator 18 of FIG. 6 is detected and supplied to a warp pattern library 38. The warp pattern library 38 contains the complements to the warp patterns in the warp pattern library 20 in the scrambler 10 of FIG. 6. The scrambled digital video signal is supplied to a field/frame store 34 which provides a field or frame of scrambled digital video to a warp engine 36. The field/frame store 34 and the warp engine 36 are generally similar to the store 14 and engine 16 of FIG. 6. The warp pattern select code signal from detector 32 instructs the warp pattern library 38 to send the correct complementary warp pattern to a second input of the warp engine 36. Since the warp pattern coupled to the warp engine is the complement of the warp pattern used to scramble the signal, the warp engine 36 restores the pixels distorted in the scrambling to their proper original positions. Thus, the output of the warp engine 36 comprises a descrambled video signal supplied on an output lead 40.

Although the invention has been described herein relative to specific embodiments, various additional features and advantages will be apparent from the description and drawings, and thus the scope of the invention is defined by the following claims and their equivalents.

## Claims

1. A method of scrambling a video image comprising the steps of:
providing a predetermined warp pattern commensurate with a selected local spatial distortion to be applied to the video image; and
applying the selected local spatial distortion to the video image to locally displace individual portions of the image with respect to their normal locations, as provided by the predetermined warp pattern,
wherein the warp pattern is such that the local spatial distortion applied to the portions of the video image is sufficient to render the scrambled image unwatchable, and
wherein the original video image is in the form of a two-dimensional array of pixels;
the method being **characterised in that** the selected local spatial distortion is applied to the array of pixels to locally spatially displace the pixels within the array in response to the predetermined warp pattern whilst maintaining a given pixel in the displaced pixels with the same set of contiguous pixels as it had in the original video image.

2. A method as claimed in Claim 1, further comprising
displacing each pixel of the video image by a selected amount, beginning with zero amount, horizontally and/or vertically.

3. A method as claimed in Claim 1 or Claim 2, further comprising
storing a multiplicity of predetermined warp patterns commensurate with selected different patterns of local spatial distortions to be applied to the video image.

4. A method as claimed in any preceding claim, wherein information which identifies the predetermined warp pattern used is retained to allow subsequent descrambling of the scrambled video image when authorised.

5. A method as claimed in Claim 4, wherein the scrambled video image is transmitted via a delivery network, and wherein the predetermined warp pattern used is retained by the steps of:
generating a pattern select code indicative of the predetermined warp pattern to be applied to the video image; and
inserting the pattern select code into the transmitted scrambled video image for transmission therewith.

6. A method as claimed in Claim 5, wherein the scrambled video image is subsequently descrambled by a method including the steps of:
supplying the scrambled video image as an array of pixels;
providing a descrambling warp pattern which is the complement of the predetermined warp pattern; and
applying the complementary warp pattern to the scrambled video image to restore the pixels of the array to their normal locations within the original video image before scrambling.

7. A method as claimed in Claim 6, wherein the step of providing the descrambling warp pattern includes the steps of:
detecting the pattern select code transmitted with the scrambled video image to identify the predetermined warp pattern; and
providing the complementary descrambling warp pattern in response to the detected pattern select code.

8. A method as claimed in any preceding claim, wherein there are a successive plurality of changing video images over a period of time, and wherein a fixed warp pattern is applied to the plurality of images over the period of time.

9. A method as claimed in any of Claims 1 to 7, wherein there are a successive plurality of changing video images over a period of time, and wherein several different warp patterns are applied to the plurality of images over said period of time.

10. A method as claimed in Claim 9, wherein the warp patterns change slowly over a time period of from a frame to several seconds of time.

11. A method of scrambling a video image as claimed in any preceding claim, comprising the steps of:
supplying a field or frame of digital video data in the form of a two-dimensional array of pixels to a first input of a warp engine;
storing a selected plurality of warp patterns in a warp pattern library;
generating a pattern select code indicative of a warp pattern to be applied to the array of pixels of the video data;
selecting a warp pattern from said stored plurality of patterns in response to the pattern select code; and
supplying said selected warp pattern to a second input of said warp engine to locally displace portions of said array of pixels an amount sufficient to render the resulting scrambled video data unwatchable whilst retaining the interpixel correlation, in response to said selected warp pattern.

12. A method as claimed in Claim 11, further comprising the steps of:
adding the warp pattern select code indicative of said selected warp pattern to said scrambled digital video data; and
transmitting said scrambled digital video data containing said warp pattern select code to an associated video data processing system.

13. A method as claimed in Claim 12, wherein descrambling of the scrambled digital video data is provided and comprises the steps of:
receiving the scrambled digital video data in a warp pattern select code detector to detect the warp pattern select code;
supplying a two-dimensional array of pixels of the field or frame of scrambled digital video data to an input of a warp engine;
selecting a descrambling warp pattern that is a complement of the scrambling warp pattern in response to the detected warp pattern select code;
supplying said complementary warp pattern to a second input of said warp engine; and
restoring said locally displaced portions of the array of pixels of the field or frame of digital video data to their normal locations to provide the unscrambled digital video data, in response to said complementary warp pattern.

14. Apparatus for scrambling video data, comprising:
means (18) for generating a warp pattern select code commensurate with a selected local spatial distortion to be applied to the video data; and
means (16, 22) responsive to the warp pattern select code for applying a corresponding selected warp pattern to the video data to effect the selected local spatial distortion as local displacements of portions of the video data from their normal location, wherein the selected warp pattern provides portions of the video data with local spatial distortion which is sufficient to render the scrambled video data unwatchable,
the apparatus being **characterised by** means (14) for providing the video data in the form of a two-dimensional array of pixels, and
in that the selected local spatial distortion when applied to the array of pixels is arranged to locally spatially displace the pixels within the array whilst maintaining a given pixel in the displaced pixels with the same set of contiguous pixels as it had in the original video image.

15. Apparatus as claimed in Claim 14, wherein said means (14) for providing the video data comprises a first field/frame store (14) for storing and providing fields or frames of the video data, wherein a field or frame comprises a two-dimensional array of pixels.

16. Apparatus as claimed in Claim 14 or Claim 15, wherein said means for applying includes
storing means including first memory means comprising a warp pattern library (20) for storing a multiplicity of warp patterns each of which imparts a different pattern of distortion to said array of pixels; and
said generating means (18) supplies to said applying means (16, 22) a selected warp pattern from the multiplicity of warp patterns stored in the warp pattern library.

17. Apparatus as claimed in Claim 16, wherein the applying means (16, 22) includes:
a warp engine (16) receiving said array of pixels and responsive to said selected warp pattern for displacing the pixels of the array by selected amounts whilst maintaining a given pixel in the displaced pixels with the same set of pixels originally contiguous therewith.

18. Apparatus as claimed in any of Claims 14 to 17, further comprising:
inserter means (22) responsive to the generating means (18) for inserting the warp pattern select code into the scrambled video data for transmission therewith,
wherein the inserter means (22) comprises multiplexer means receiving the array of pixels of the field or frame of video data for inserting the pattern select code from the generating means into the field or frame of scrambled video data, to allow subsequent descrambling of the scrambled video data when authorised.

19. Apparatus as claimed in Claim 18, further providing descrambling of the scrambled video data, the apparatus comprising:
means (32) for receiving the combined scrambled video data and warp pattern select code, for detecting the pattern select code;
second memory means (38) for supplying a selected descrambling pattern which is the complement of the selected warp pattern in response to the pattern select code; and
means (36) responsive to the selected descrambling pattern for descrambling the scrambled video data to restore the portions of the video data to their normal locations.

20. Apparatus as claimed in Claim 19, further comprising a second field/frame store (34) for providing the fields or frames of the scrambled video data to said means for descrambling, wherein a field or frame is formed of a two-dimensional array of pixels.

21. Apparatus as claimed in Claim 19 or Claim 20, wherein said second memory means (38) comprises a warp pattern library (38) for storing a multiplicity of descrambling warp patterns which are complements of respective warp patterns in said first memory means (20).

22. Apparatus as claimed in any of Claims 19 to 21, wherein the means for descrambling includes a warp engine (36) receiving said array of pixels and responsive to a selected descrambling warp pattern for restoring the pixels of the array to their normal locations in the original two-dimensional array.

23. Apparatus as claimed in any of Claims 14 to 22, wherein
the providing means (14) includes a field/frame store for providing a field/frame of video data;
and the applying means includes memory means in the form of a look up table of a multiplicity of warp patterns; and
the responsive means (16,22) includes a warp engine (16) for locally displacing individual portions of the field/frame in accordance with the selected warp pattern.

24. Apparatus as claimed in Claim 23, further comprising means (22) for retaining the warp pattern select code to allow identification of the selected warp pattern.

25. Apparatus as claimed in Claim 24, further including descrambling of the scrambled video data, including:
means (32) responsive to the retaining means for detecting the warp pattern selected code;
second memory means (38) for supplying a descrambling warp pattern which is the complement of a respective pattern of the multiplicity of warp patterns, in response to the detected pattern select code; and
means including a second warp engine (36) responsive to the complementary warp pattern for restoring the locally displaced individual portions of the field/frame to their normal locations.

## Patentansprüche

1. Verfahren zum Verschlüsseln eines Videobildes, mit den Schritten:
Bereitstellen eines vorbestimmten Verzerrungsmusters, das einer ausgewählten lokalen räumlichen Verzerrung entspricht, die dem Videobild aufgeprägt werden soll; und
Aufprägen der ausgewählten lokalen räumlichen Verzerrung auf das Videobild, um einzelne Bereiche des Bildes bezüglich ihrer normalen Positionen nach Vorgabe des vorbestimmten Verzerrungsmusters lokal zu verlagern;
wobei das Verzerrungsmuster so ist, dass die lokale räumliche Verzerrung, die den Bereichen des Videobildes aufgeprägt wird, ausreichend ist, um das verschlüsselte Bild für eine Betrachtung ungeeignet zu machen; und
wobei das ursprüngliche Videobild die Form eines zweidimensionalen Arrays aus Pixeln hat;
wobei das Verfahren **dadurch gekennzeichnet ist, dass** die ausgewählte lokale räumliche Verzerrung auf das Array aus Pixeln aufgeprägt wird, um die Pixel in dem Array in Reaktion auf das vorbestimmte Verzerrungsmuster lokal räumlich zu verlagern, wobei ein gegebenes Pixel von den verlagerten Pixeln in dem gleichen Satz von benachbarten Pixeln verbleibt wie in dem ursprünglichen Videobild.

2. Verfahren nach Anspruch 1, außerdem mit
horizontales und/oder vertikales Verlagern von jedem Pixel des Videobildes über eine ausgewählte Distanz, und zwar beginnend mit einer Distanz von Null.

3. Verfahren nach Anspruch 1 oder Anspruch 2, außerdem mit:
Speichern von einer Vielzahl von vorbestimmten Verzerrungsmustern, die ausgewählten verschiedenen Mustern von lokalen räumlichen Verzerrungen entsprechen, die dem Videobild aufgeprägt werden.

4. Verfahren nach einem der vorhergehenden Ansprüche, bei dem Informationen, die das verwendete vorbestimmte verzerrungsmuster identifizieren, gespeichert werden, um bei Berechtigung das anschließende Entschlüsseln des verschlüsselten Videobildes zu ermöglichen.

5. Verfahren nach Anspruch 4, bei dem das verschlüsselte Videobild über ein Zuliefer-Netzwerk übertragen wird und bei dem das verwendete vorbestimmte Verzerrungsmuster mit den Schritten erhalten bleibt:
Erzeugen von einem Muster-Auswahlcode, der das vorbestimmte Verzerrungsmuster angibt, das dem Videobild aufgeprägt werden soll; und
Einsetzen von dem Muster-Auswahlcode in das übertragene verschlüsselte Videobild, um mit diesem zusammen übertragen zu werden.

6. Verfahren nach Anspruch 5, bei dem das verschlüsselte Videobild anschließend durch ein Verfahren entschlüsselt wird, das die Schritte umfasst:
Liefern des verschlüsselten Videosignals als ein Array aus Pixeln;
Bereitstellen von einem Entschlüsselung-Verzerrungsmuster, welches das Komplement zu dem vorbestimmten Verzerrungsmuster ist; und
Aufprägen des komplementären Verzerrungsmusters auf das verschlüsselte Videobild, um die Pixel von dem Array in ihre normalen Positionen in dem ursprünglichen Videobild vor der Verschlüsselung zurückzubringen.

7. Verfahren nach Anspruch 6, bei dem der Schritt des Bereitstellens des Entschlüsselung-Verzerrungsmusters die Schritte umfasst:
Erfassen von dem Muster-Auswahlcode, der mit dem verschlüsselten Videobild übertragen wird, um das vorbestimmte Verzerrungsmuster zu identifizieren; und
Bereitstellen des komplementären Entschlüsselung-Verzerrungsmusters in Reaktion auf den erfassten Muster-Auswahlcode.

8. Verfahren nach einem der vorhergehenden Ansprüche, bei dem über einen Zeitraum eine aufeinanderfolgende Vielzahl von sich verändernden Videobildern vorhanden ist und bei dem über diesen Zeitraum ein gleichbleibendes Verzerrungsmuster auf die Vielzahl von Bildern aufgeprägt wird.

9. Verfahren nach einem der Ansprüche 1 bis 7, bei dem über einen Zeitraum eine aufeinanderfolgende Vielzahl von sich verändernden Videobildern vorhanden ist und bei dem über diesen Zeitraum mehrere verschiedene Verzerrungsmuster auf die Vielzahl von Bildern aufgeprägt werden.

10. Verfahren nach Anspruch 9, bei dem sich die Verzerrungsmuster über einen Zeitraum von einem Vollbild bis hin zu mehreren Sekunden langsam verändern.

11. Verfahren zum Verschlüsseln eines Videobildes nach einem der vorhergehenden Ansprüche, mit den Schritten:
Liefern von einem Teilbild oder Vollbild aus digitalen Videodaten in der Form eines zweidimensionalen Arrays aus Pixeln zu einem ersten Eingang einer Verzerrungsmaschine;
Speichern einer ausgewählten Vielzahl von Verzerrungsmustern in einer Verzerrungsmuster-Bibliothek;
Erzeugen von einem Muster-Auswahlcode, der ein Verzerrungsmuster angibt, das dem Array aus Pixeln der Videodaten aufgeprägt werden soll;
Auswählen eines Verzerrungsmusters aus der gespeicherten Vielzahl von Mustern in Reaktion auf den Muster-Auswahlcode; und
Liefern des ausgewählten Verzerrungsmusters zu einem zweiten Eingang der Verzerrungsmaschine, um Bereiche des Arrays aus Pixeln in Reaktion auf das ausgewählte Verzerrungsmuster über eine Distanz lokal zu verlagern, die ausreichend ist, um die resultierenden verschlüsselten Videodaten für eine Betrachtung ungeeignet zu machen, wobei die Zwischen-Pixel-Korrelation beibehalten wird.

12. Verfahren nach Anspruch 11, außerdem mit den Schritten:
Hinzufügen von dem Verzerrungsmuster-Auswahlcode, der das ausgewählte Verzerrungsmuster angibt, zu den verschlüsselten digitalen Videodaten; und
Übertragen der verschlüsselten digitalen Videodaten, die den Verzerrungsmuster-Auswahlcode enthalten, zu einem zugehörigen Videodaten-Verarbeitungssystem.

13. Verfahren nach Anspruch 12, bei dem das Entschlüsseln der verschlüsselten digitalen Videodaten vorgesehen ist und die Schritte umfasst:
Empfangen der verschlüsselten digitalen Videodaten in einem Verzerrungsmuster-Auswahlcode-Detektor, um den Verzerrungsmuster-Auswahlcode zu erfassen; und
Liefern eines zweidimensionalen Arrays aus Pixeln von dem Teilbild oder Vollbild der verschlüsselten digitalen Videodaten an einem Eingang von einer Verzerrungsmaschine;
Auswählen eines Entschlüsselung-Verzerrungsmusters, das ein Komplement des Verschlüsselung-Verzerrungsmusters ist, in Reaktion auf den erfassten Verzerrungsmuster-Auswahlcode;
Liefern des komplementären Verzerrungsmusters an einen zweiten Eingang der Verzerrungsmaschine; und
Rücksetzen der lokal verlagerten Bereiche des Arrays aus Pixeln von dem Halbbild oder Vollbild der digitalen Videodaten in ihren normalen Positionen in Reaktion auf das komplementäre Verzerrungsmuster, um die unverschlüsselten digitalen Videodaten bereitzustellen.

14. Vorrichtung zum Verschlüsseln von Videodaten, mit:
einer Einrichtung (18) zum Erzeugen von einem Verzerrungsmuster-Auswahlcode, der einer ausgewählten lokalen räumlichen Verzerrung entspricht, die auf die Videodaten aufgeprägt werden soll; und
einer Einrichtung (16, 22), die auf den Verzerrungsmuster-Auswahlcode anspricht, um ein entsprechendes ausgewähltes Verzerrungsmuster auf die Videodaten aufzuprägen, um die ausgewählte lokale räumliche Verzerrung als lokale Verlagerungen von Bereichen der Videodaten aus ihrer normalen Position zu bewirken, wobei das ausgewählte Verzerrungsmuster Bereiche der Videodaten mit lokaler räumlicher Verzerrung bereitstellt, die ausreichend ist, um die Videodaten für eine Betrachtung ungeeignet zu machen;
wobei die Vorrichtung **gekennzeichnet ist durch** eine Einrichtung (14), um die Videodaten in der Form eines zweidimensionalen Arrays aus Pixeln bereitzustellen; und
dass die ausgewählte lokale räumliche Verzerrung, wenn sie dem Array aus Pixeln aufgeprägt wird, dazu ausgestaltet ist, um die Pixel in dem Array lokal räumlich zu verlagern, wobei ein gegebenes Pixel von den verlagerten Pixeln in dem gleichen Satz von benachbarten Pixeln verbleibt wie in dem ursprünglichen Videobild.

15. Vorrichtung nach Anspruch 14, bei der die Einrichtung (14) zum Bereitstellen der Videodaten aufweist: einen ersten Halbbild/Vollbild-Speicher (14) zum Speichern und Bereitstellen von Halbbildern oder Vollbildern der Videodaten, wobei ein Halbbild oder Vollbild ein zweidimensionales Array aus Pixeln beinhaltet.

16. Vorrichtung nach Anspruch 14 oder Anspruch 15, bei der die Einrichtung zum Aufprägen aufweist:
eine Speichervorrichtung, die eine erste Speichereinrichtung aufweist, die eine Verzerrungsmuster-Bibiliothek (20) enthält, um eine Vielzahl von Verzerrungsmustern zu speichern, von denen jedes ein anderes Muster der Verzerrung auf das Array aus Pixeln aufprägt; und
wobei die Erzeugungseinrichtung (18) zur Aufprägungseinrichtung (16, 22) ein ausgewähltes Verzerrungsmuster aus der Vielzahl von Verzerrungsmustern liefert, die in der Verzerrungsmuster-Bibliothek gespeichert sind.

17. Vorrichtung nach Anspruch 16, bei der die Aufprägungseinrichtung (16, 22) aufweist:
eine Verzerrungsmaschine (16), die das Array aus Pixeln erhält und auf das ausgewählte Verzerrungsmuster anspricht, um die Pixel von dem Array über ausgewählte Distanzen zu verlagern, wobei ein gegebenes Pixel von den verlagerten Pixeln in dem gleichen Satz von Pixeln verbleibt, mit denen es ursprünglich benachbart war.

18. Vorrichtung nach einem der Ansprüche 14 bis 17, außerdem mit:
einer Einsetzeinrichtung (22), die auf die Erzeugungseinrichtung (18) anspricht, um den Verzerrungsmuster-Auswahlcode in die verschlüsselten Videodaten einzusetzen, um zusammen mit diesen übertragen zu werden;
wobei die Einsetzeinrichtung (22) eine Multiplexereinrichtung beinhaltet, die das Array aus Pixeln von dem Halbbild oder Vollbild der Videodaten empfängt, um den Muster-Auswahlcode von der Erzeugungseinrichtung in das Halbbild oder Vollbild der verschlüsselten Videodaten einzusetzen, um bei Berechtigung ein anschließendes Entschlüsseln der verschlüsselten Videodaten zu ermöglichen.

19. Vorrichtung nach Anspruch 18, die außerdem das Entschlüsseln der verschlüsselten Videodaten bewirkt, wobei die Vorrichtung aufweist:
eine Einrichtung (32), um die kombinierten verschlüsselten Videodaten und den Verzerrungsmuster-Auswahlcode zu empfangen, um den Muster-Auswahlcode zu erfassen;
eine zweite Speichereinrichtung (38), um in Reaktion auf den Muster-Auswahlcode ein gewähltes Entschlüsselungsmuster bereitzustellen, welches das Komplement zu dem ausgewählten Verzerrungsmuster ist; und
eine Einrichtung (36), die auf das ausgewählte Entschlüsselungsmuster anspricht, um die verschlüsselten Videodaten zu entschlüsseln, um die Bereiche der Videodaten in ihre normalen Positionen zurückzubringen.

20. Vorrichtung nach Anspruch 19, außerdem mit einem zweiten Halbbild/Vollbild-Speicher (34), um die Halbbilder oder Vollbilder der verschlüsselten Videodaten der Einrichtung zum Entschlüsseln zur Verfügung zu stellen, wobei ein Halbbild oder Vollbild aus einem zweidimensionalen Array aus Pixeln gebildet ist.

21. Vorrichtung nach Anspruch 19 oder 20, bei der die zweite Speichereinrichtung (38) eine Verzerrungsmuster-Bibiliothek (38) enthält, um eine Vielzahl von Entschlüsselung-Verzerrungsmustern zu speichern, die Komplemente von jeweiligen Verzerrungsmustern in der ersten Speichereinrichtung (20) sind.

22. Vorrichtung nach einem der Ansprüche 19 bis 21, bei der die Einrichtung zum Entschlüsseln eine Verzerrungsmaschine (36) enthält, die das Array aus Pixeln empfängt und auf ein ausgewähltes Entschlüsselung-Verzerrungsmuster anspricht, um die Pixel des Arrays in ihre normalen Positionen in dem ursprünglichen zweidimensionalen Array zurückzubringen.

23. Vorrichtung nach einem der Ansprüche 14 bis 22, bei der:
die Einrichtung (14) zum Bereitstellen einen Halbbild/Vollbild-Speicher aufweist, um ein Halbbild/Vollbild der Videodaten bereitzustellen;
die Einrichtung zum Aufprägen eine Speichereinrichtung in Form einer Verweistabelle mit einer Vielzahl von Verzerrungsmustern enthält; und
bei der die ansprechende Einrichtung (16, 22) eine Verzerrungsmaschine (16) aufweist, um einzelne Bereiche von dem Halbbild/Vollbild entsprechend dem ausgewählten Verzerrungsmuster lokal zu verlagern.

24. Vorrichtung nach Anspruch 23, außerdem mit einer Einrichtung (22), um den Verzerrungsmuster-Auswahlcode zu speichern, um eine Identifizierung des ausgewählten Verzerrungsmusters zu ermöglichen.

25. Vorrichtung nach Anspruch 24, außerdem mit dem Entschlüsseln der verschlüsselten Videodaten, mit:
einer Einrichtung (32), die auf die Speichereinrichtung anspricht, um den Verzerrungsmuster-Auswahlcode zu erfassen;
einer zweiten Speichereinrichtung (38), um in Reaktion auf den erfassten Muster-Auswahlcode ein Entschlüsselung-Verzerrungsmuster bereitzustellen, welches das Komplement von einem zugehörigen Muster aus der Vielzahl von Verzerrungsmustern ist; und
einer Einrichtung, die eine zweite Verzerrungsmaschine (36) enthält, die auf das komplementäre Verzerrungsmuster anspricht, um die lokal verlagerten einzelnen Bereiche von dem Halbbild/Vollbild in ihre normalen Positionen zurückzubringen.

## Revendications

1. Procédé de brouillage d'une image vidéo comprenant les étapes suivantes :
délivrer un motif de déformation prédéterminé correspondant à une distorsion spatiale locale sélectionnée à appliquer à l'image vidéo ; et
appliquer la distorsion spatiale locale sélectionnée à l'image vidéo pour déplacer localement des parties individuelles de l'image par rapport à leurs emplacements normaux, comme délivré par le motif de déformation prédéterminé,
dans lequel le motif de déformation est tel que la distorsion spatiale locale appliquée aux parties de l'image vidéo est suffisante pour rendre l'image brouillée non visualisable, et
dans lequel l'image vidéo originale est sous la forme d'un tableau de pixels à deux dimensions ;
le procédé étant **caractérisé en ce que** la distorsion spatiale locale sélectionnée est appliquée au tableau de pixels pour déplacer spatialement localement les pixels à l'intérieur du tableau en réponse au motif de déformation prédéterminé tout en maintenant un pixel donné parmi les pixels déplacés avec le même ensemble de pixels contigus qu'il avait dans l'image vidéo originale.

2. Procédé selon la revendication 1, comprenant de plus :
le fait de déplacer chaque pixel de l'image vidéo d'une quantité choisie, en commençant par une quantité zéro, horizontalement et/ou verticalement.

3. Procédé selon la revendication 1 ou la revendication 2, comprenant de plus :
le stockage d'une multiplicité de motifs de déformation prédéterminés correspondant à différents motifs sélectionnés de distorsions spatiales locales à appliquer à l'image vidéo.

4. Procédé selon l'une quelconque des revendications précédentes, dans lequel l'information qui identifie le motif de déformation prédéterminé utilisé est conservée pour permettre un décodage ultérieur de l'image vidéo brouillée quand cela sera autorisé.

5. Procédé selon la revendication 4, dans lequel l'image brouillée est transmise via un réseau de distribution, et dans lequel le motif de déformation prédéterminé utilisé est conservé selon les étapes suivantes :
la génération d'un code de sélection de motif indiquant le motif de déformation prédéterminé à appliquer à l'image vidéo ; et
l'insertion du code de sélection de motif dans l'image vidéo brouillée transmise pour transmission conjointe.

6. Procédé selon la revendication 5, dans lequel l'image vidéo brouillée est ultérieurement décodée par un procédé comprenant les étapes suivantes :
la délivrance de l'image vidéo brouillée comme tableau de pixels ;
la délivrance d'un motif de déformation de décodage qui est le complément du motif de déformation prédéterminé ; et
l'application du motif de déformation complémentaire à l'image vidéo brouillée pour ramener les pixels du tableau à leurs emplacements normaux dans l'image vidéo originale avant brouillage.

7. Procédé selon la revendication 6, dans lequel l'étape de délivrance du motif de déformation de décodage comprend les étapes suivantes :
la détection du code de sélection de motif transmis avec l'image vidéo brouillée pour identifier le motif de déformation prédéterminé ; et
la délivrance du motif de déformation de décodage complémentaire correspondant au code de sélection de motif détecté.

8. Procédé selon l'une quelconque des revendications précédentes, dans lequel il existe une pluralité successive d'images vidéo changeantes pendant une période de temps, et dans lequel un motif de déformation fixé est appliqué à la pluralité d'images pendant cette période de temps.

9. Procédé selon l'une quelconque des revendications 1 à 7, dans lequel il existe une pluralité successive d'images vidéo changeantes pendant une période de temps, et dans lequel plusieurs motifs de déformation différents sont appliqués à la pluralité d'images pendant ladite période de temps.

10. Procédé selon la revendication 9, dans lequel les motifs de déformation changent lentement pendant une période de temps allant d'une trame à plusieurs secondes.

11. Procédé de brouillage d'une image vidéo selon l'une quelconque des revendications précédentes comprenant les étapes suivantes :
la délivrance à une première entrée d'une machine à déformer d'un champ ou d'une trame de données vidéo numérique sous la forme d'un tableau de pixels à deux dimensions ;
le stockage d'une pluralité choisie de motifs de déformation dans une bibliothèque de motifs de déformation ;
la génération d'un code de sélection de motif indiquant un motif de déformation à appliquer au tableau de pixels des données vidéo ;
la sélection d'un motif de déformation à partir de ladite pluralité stockée de motifs en réponse au code de sélection de motif ; et
la délivrance à une seconde entrée de ladite machine à déformer dudit motif de déformation sélectionné pour déplacer localement des parties dudit tableau de pixels d'une quantité suffisante pour rendre les données vidéo brouillées résultantes non visualisables tout en conservant la corrélation inter-pixels, en réponse audit motif de déformation sélectionné.

12. Procédé selon la revendication 11, comprenant de plus les étapes suivantes :
l'ajout du code de sélection de motif de déformation indiquant ledit motif de déformation sélectionné auxdites données vidéo numériques brouillées ; et
la transmission desdites données vidéo numériques brouillées contenant ledit code de sélection de motif de déformation à un système de traitement de données vidéo associé.

13. Procédé selon la revendication 12, dans lequel on trouve le décodage des données vidéo numériques brouillées comprenant les étapes suivantes :
la réception des données vidéo numériques brouillées dans un détecteur de code de sélection de motif de déformation pour détecter le code de sélection de motif de déformation ;
la fourniture d'un tableau, de pixels à deux dimensions du champ ou de la trame des données vidéo numériques brouillées à une entrée d'une machine à déformer ;
la sélection d'un motif de déformation de décodage qui est un complément du motif de déformation de brouillage correspondant au code de sélection de motif de déformation détecté ;
la délivrance dudit motif de déformation complémentaire à une seconde entrée de ladite machine à déformer ; et
ramener lesdites parties localement déplacées du tableau de pixels du champ ou de la trame des données vidéo numériques à leurs emplacements normaux pour retrouver les données vidéo numériques non brouillées, en réponse audit motif de déformation complémentaire.

14. Dispositif pour brouiller des données vidéo, comprenant :
un moyen (18) pour générer un code de sélection de motif de déformation correspondant à une distorsion spatiale locale sélectionnée à appliquer aux données vidéo ; et
un moyen (16,22) répondant au code de sélection de motif de déformation pour appliquer un motif de déformation correspondant sélectionné aux données vidéo pour réaliser la distorsion spatiale locale sélectionnée sous forme de déplacements locaux de parties des données vidéo par rapport à leur emplacement normal, dans lequel le motif de déformation sélectionné fournit des parties des données vidéo avec une distorsion spatiale locale suffisante pour rendre non visualisables les données vidéo brouillées,
le dispositif étant **caractérisé par** un moyen (14) pour fournir les données vidéo sous la forme d'un tableau de pixels à deux dimensions, et
en ce que la distorsion spatiale locale sélectionnée, quand elle est appliquée au tableau de pixels, est adaptée pour déplacer spatialement localement les pixels à l'intérieur du tableau tout en maintenant un pixel donné parmi les pixels déplacés avec le même ensemble de pixels contigu que celui qu'il avait dans l'image vidéo originale.

15. Dispositif selon la revendication 14, dans lequel ledit moyen (14) pour fournir les données vidéo comprennent un premier stockage de champ/trame (14) pour stocker et fournir des champs ou trames des données vidéo, dans lequel un champ ou une trame est composé d'un tableau de pixels à deux dimensions.

16. Dispositif selon la revendication 14 ou la revendication 15, dans lequel ledit moyen d'application comprend
des moyens de stockage comprenant un premier moyen mémoire comprenant une bibliothèque de motifs de déformation (20) pour stocker une multiplicité de motifs de déformation, chacun d'eux transmettant un motif de distorsion différent audit tableau de pixels ; et
ledit moyen de génération (18) fournissant auxdits moyens d'application (16, 22) un motif de déformation sélectionné parmi la multiplicité de motifs de déformation stockés dans la bibliothèque de motifs de déformation.

17. Dispositif selon la revendication 16, dans lequel le moyen d'application (16, 22) comprend :
une machine à déformer (16) recevant ledit tableau de pixels et répondant audit motif de déformation sélectionné pour déplacer les pixels du tableau par quantités choisies tout en maintenant un pixel donné parmi les pixels déplacés avec le même ensemble de pixels contigu avec lui que celui qui l'était à l'origine.

18. Dispositif selon l'une quelconque des revendications 14 à 17, comprenant de plus :
un moyen d'insertion (22) répondant au moyen de génération (18) pour insérer le code de sélection de motif de déformation dans les données vidéo brouillées pour transmission conjointe.
dans lequel le moyen d'insertion (22) comprend un moyen de multiplexage recevant le tableau de pixels du champ ou de la trame des données vidéo pour insérer le code de sélection de motif provenant des moyens de génération dans le champ ou la trame des données vidéo brouillées pour permettre un décodage ultérieur des données vidéo brouillées quand cela sera autorisé.

19. Dispositif selon la revendication 18, fournissant de plus le décodage des données vidéo brouillées, le dispositif comprenant :
un moyen (32) pour recevoir les données vidéo brouillées et le code de sélection de motif de déformation combinés, pour détecter le code de sélection de motif ;
un second moyen mémoire (38) pour fournir un motif de décodage sélectionné qui est le complément du motif de déformation sélectionné, en réponse au code de sélection de motif ; et
un moyen (36) répondant au motif de décodage sélectionné pour décoder les données vidéo brouillées pour ramener les parties des données vidéo à leurs emplacements normaux.

20. Dispositif selon la revendication 19, comprenant de plus un second stockage de champ/trame (34) pour fournir les champs ou trames des données vidéo brouillées auxdits moyens pour décodage, dans lequel un champ ou une trame est constitué d'un tableau de pixels à deux dimensions.

21. Dispositif selon la revendication 19 ou la revendication 20, dans lequel ledit second moyen mémoire (38) comprend une bibliothèque de motifs de déformation (38) pour stocker une multiplicité de motifs de déformation de décodage qui sont les compléments des motifs de déformation respectifs dans ledit premier moyen mémoire (20).

22. Dispositif selon l'une quelconque des revendications 19 à 21, dans lequel les moyens de décodage comprennent une machine à déformer (36) recevant ledit tableau de pixels et répondant à un motif de déformation de décodage sélectionné pour ramener les pixels du tableau à leurs emplacements normaux dans le tableau à deux dimensions original.

23. Dispositif selon l'une quelconque des revendications 14 à 22, dans lequel
le moyen (14) pour fournir les données vidéo comprennent un stockage de champ/trame pour fournir un(e) champ/trame des données vidéo ;
et les moyens d'application comprennent un moyen mémoire sous forme d'une table de référence d'une multiplicité de motifs de déformation ; et
les moyens réactifs (16,22) comprennent une machine à déformer (16) pour déplacer localement des parties individuelles du (de la) champ/trame conformément au motif de déformation sélectionné.

24. Dispositif selon la revendication 23, comprenant de plus un moyen (22) pour mémoriser le code de sélection de motif de déformation pour permettre l'identification du motif de déformation sélectionné.

25. Dispositif selon la revendication 24, comprenant de plus le décodage des données vidéo brouillées, comprenant :
un moyen (32) réagissant aux moyens de mémorisation pour détecter le code de sélection de motif de déformation ;
un second moyen mémoire (38) pour délivrer un motif de déformation de décodage qui est le complément d'un motif respectif d'une multiplicité de motifs de déformation, en réponse au code de sélection de motif détecté ; et
un moyen comprenant une seconde machine à déformer (36) réagissant au motif de déformation complémentaire pour ramener les parties individuelles localement déplacées du (de la) champ/trame à leurs emplacements normaux.
